# EUROPÄISCHE PATENTSCHRIFT

(11) **EP 1 592 326 B1**
(45) Veröffentlichungstag und Bekanntmachung des Hinweises auf die Patenterteilung: **14.11.2007**
(21) Anmeldenummer: 04710345.2
(22) Anmeldetag: 12.02.2004
(51) Int. Cl.: A47C 20/04, A47C 1/024, H02K 5/15, H02K 7/06, H02K 5/10, F16H 25/20

(54) **ELEKTROMOTORISCHER LINEARANTRIEB**
ELECTROMOTIVE LINEAR DRIVE UNIT
SYSTEME D'ENTRAINEMENT LINEAIRE ELECTROMOTEUR

(30) Priorität: 13.02.2003 DE 20302412 U
(43) Veröffentlichungstag der Anmeldung: 09.11.2005
(73) Patentinhaber: Dewert Antriebs- und Systemtechnik GmbH, 32278 Kirchlengern (DE)
(72) Erfinder: HANEBALL, Frank, 32839 Steinheim (DE); MÜLLER, Christian, 32839 Steinheim (DE)
(74) Vertreter: Specht, Peter
(86) Internationale Anmeldenummer: PCT/EP2004/001286
(87) Internationale Veröffentlichungsnummer: WO 2004/071244

(56) Entgegenhaltungen:
- EP-A- 1 247 477
- WO-A-02/03903
- WO-A-02/29284
- DE-A- 3 843 967
- FR-A- 2 632 460
- FR-A- 2 810 018
- US-A- 4 557 153
- US-A- 4 584 902
- US-A- 4 858 481
- US-A- 5 593 313
- PATENT ABSTRACTS OF JAPAN Bd. 2000, Nr. 20, 10. Juli 2001 (2001-07-10) -& JP 2001 077552 A (MATSUSHITA ELECTRIC IND CO LTD), 23. März 2001 (2001-03-23)
- PATENT ABSTRACTS OF JAPAN Bd. 1999, Nr. 08, 30. Juni 1999 (1999-06-30) -& JP 11 074657 A (NEC HOME ELECTRON LTD), 16. März 1999 (1999-03-16)

## Beschreibung

Die Erfindung betrifft einen elektromotorischen Linearantrieb nach dem Oberbegriff des Anspruches 1.

Der in Rede stehende elektromotorische Linearantrieb ist besonders zum Verstellen der beweglichen Teile eines Möbels, beispielsweise eines Lattenrostes, eines Sessels und dergleichen geeignet. In bevorzugter Ausführung ist der Linearantrieb ein Spindeltrieb, d. h. eine Spindel wird über ein die Motordrehzahl herabsetzendes Getriebe rotierend angetrieben. Eine gegen Drehung gesicherte Spindelmutter verfährt dann auf der Spindel.

Die Spindelmutter ist mit einem Hubrohr verbunden, welches mit dem zu verstellenden Bauteil antriebstechnisch gekoppelt ist. Dies kann beispielsweise über einen einfachen Hebel oder über einen Beschlag erfolgen.

Das Hubrohr kann entweder in seinem freien Endbereich als Anschlußelement ausgebildet sein oder es kann ein Anschlußelement, beispielsweise ein Gabelkopf, darauf aufgesetzt sein. Das andere Anschlußelement ist üblicherweise ebenfalls ein Gabelkopf, der an dem Gehäuse angesetzt ist.

Der dem Gehäuse zugeordnete Gabelkopf dient als Drehmomentstütze.

Ein derartiger Antrieb ist beispielsweise aus der DE 94 04 383 U bekannt. Bei diesem Linearantrieb wird aus dem Gehäuse, dem Motortopf und dem Gabelkopf ein einstückiges Formteil gebildet. Es ist zwar dann nur ein Werkzeug erforderlich, um dieses Formteil im Spritzgießverfahren herzustellen, jedoch ist die Montagefreundlichkeit dadurch beeinträchtigt. Da derartige Antriebe in großen Stückzahlen hergestellt werden, sind die Montagekosten relativ hoch.

Weiterhin ist aus der US 4 557 153 ein Linearantrieb mit einer Gewindebüchse zum Anschrauben einen Anschlußteils bekannt. US 4 584 902 zeigt einen aufschraubbaren Motortopf.

Der Erfindung liegt die Aufgabe zugrunde, einen elektromotorischen Linearantrieb der eingangs näher beschriebenen Art so zu gestalten, daß er gegenüber den bekannten Ausführungen kostengünstiger herstellbar ist, und daß er montagefreundlicher wird.

Die gestellte Aufgabe wird mit einem elektromotorischen Linearantrieb mit den Merkmalen der Anspruchs 1 gelöst.

Der Motortopf und das Anschlußelement können nunmehr mit dem Gehäuse verbunden werden, wenn bereits Bauteile des Linearantriebes montiert sind. Da die Verbindungsbereiche in axialer Richtung, d. h. in Richtung der Mittellängsachse des Motortopfes und in Richtung der Mittellängsachse des Anschlußelementes formschlüssig sind, ist eine entsprechende Verschiebung beim Betrieb des Linearantriebes wirksam verhindert.

Da die Verbindungen in den radialen Richtungen durch Drehbewegungen erfolgen, sind die Verbindungsbereiche besonders einfach herzustellen, da Drehbewegungen mit konstruktiv einfachen Mitteln erzeugt werden können.

Die durch die Drehbewegungen gebildeten Verbindungen werden erfindungsgemäß durch ineinander greifende Gewindegänge erzeugt. Da die miteinander zu verbindenden Teile aus Kunststoff im Spritzgießverfahren hergestellt werden, werden die Gewindegänge in einem Arbeitsgang mitgespritzt.

In bevorzugter Ausführung ist das Gehäuse mit den Innengewindegängen und der Motortopf und das Anschlußteil mit Außengewindegängen versehen.

Das Gehäuse kann mit Außengewindegängen und/oder Innengewindegängen ausgestattet sein. Der Motortopf und das Anschlussteil sind dann mit korrespondierenden Gewindegängen ausgestattet. Demzufolge könnte der Motortopf mit Innengewindegängen und/oder Außengewindegängen und das Anschlussteil ebenfalls mit Außen- oder Innengewindegängen versehen sein. Bevorzugt ist das Gehäuse jedoch so gestaltet, dass es zur Verbindung mit dem Motortopf und dem Anschlussteil entweder Außengewindegänge oder Innengewindegänge aufweist.

In einer anderen Ausführung könnte der Motortopf als Ringelement ausgebildet sein, und schließend in den Ringspalt zwischen dem Motor und dem Gehäuse eingesetzt sein. Bei einer solchen Ausführung ist es dann nicht zwingend notwendig, daß die beiden Bauteile miteinander verschraubt sind, in bevorzugter Ausführung ist jedoch vorgesehen, daß das den Motortopf bildende Ringelement mit den Gewindegängen des Gehäuses korrespondiert. In weiterer Ausgestaltung ist noch vorgesehen, daß das Gehäuse des Motors topfförming gestaltet ist und an der dem Gehäuse zugewandten Seite offen ist, und daß in den gebildeten Ringspalt, vorzugsweise an der dem Gehäuse zugewandten Seite eine Dichtung eingesetzt ist.

Damit das Anschlußteil, vorzugsweise der Gabelkopf, in verschiedenen Stellungen gegenüber dem Gehäuse festsetzbar ist, sind erfindungsgemäß das Innnegewinde des Gehäuses und das Außengewinde des Anschlußelementes bzw. des Gabelkopfes mehrgängig ausgebildet. Dabei ist besonders an eine Vielgängigkeit gedacht, da dann das Anschlußelement in vorzugsweise zwei verschiedenen Stellungen festsetzbar ist.

Obwohl die ineinander greifenden Gewindegänge fest angezogen werden können, so daß das Zurückdrehen nur mit einem gewissen Kraftaufwand möglich ist, ist vorgesehen, daß die Verbindungen zusätzlich gesichert sind. Dies kann beispielsweise durch Federzungen, Schrauben oder Stifte erfolgen, die in entsprechende Ausnehmungen eingreifen. Dadurch wäre auch eine bestimmte Stellung insbesondere für das Anschlußelement sichergestellt.

Federnde Rastelemente bieten außerdem den Vorteil, daß keine zusätzlichen Sicherungselemente, beispielsweise Schrauben oder dergleichen, in das Gehäuse bzw. den Motortopf oder das Anschlußelement eingedreht werden müssen.

Insbesondere die Sicherung des Motortopfes kann auch ohne federnde Rastzungen oder dergleichen erfolgen. Alternativ ist deshalb vorgesehen, daß das Motorgehäuse mit einer auf einem Kreisring liegenden Stirnverzahnung versehen ist und daß der Motortopf wenigstens einen Rastzahn aufweist, der dann einen Zahn der Stirnverzahnung hintergreift, so daß ein Abschrauben des Motortopfes vom Gehäuse nur noch durch Bruch möglich ist.

Die Stirnverzahnung ist asymmetrisch gestaltet, d. h. jeder Zahn hat eine steile und eine äußerst flache Flanke.

Der Rastzahn könnte ein klein wenig nachgeben, so daß beim Überspringen der flachen Flanke eine Deformation möglich ist und die steile Flanke ein Zurückdrehen nicht mehr zuläßt. Auch diese Stirnverzahnung wird durch eine entsprechende Auslegung des Spritzwerkzeuges in einem Gang mit gespritzt. Alternativ zu der Festlegung durch Rastzähne könnten auch mechanische Verbindungselemente wie z. B. Schrauben verwendet werden.

Das Stromversorgungskabel zur Stromversorgung des Antriebsmotors kommt üblicherweise von der Spannungsquelle in Form einer Steckdose.

Der elektromotorische Möbelantrieb wird üblicherweise mit einer Sicherheitsgleichspannung betrieben. Dabei gibt es die Möglichkeit, daß entweder ein entsprechender Transformator mit nachgeschaltetem Gleichrichter als Baueinheit in die Steckdose gesteckt wird oder innerhalb des Möbelantriebes montiert wird. Unabhängig von der jeweiligen Ausführung ist jedoch vorgesehen, daß im Gehäuse oder im Motortopf eine Steckdose installiert ist, so daß das Stromzuführkabel am zugeordneten Ende mit einem Stecker versehen ist. Dies ist vorzugsweise ein Kleinstecker entweder im Flach- oder im Rundformat. In anderer Ausführung könnte auch jede Ader des Stromzuführkabels einen Stecker tragen.

Da die montierten Linearantriebe häufig an schlecht zugänglichen Stellen montiert sind, beim Lösen des Steckers jedoch die elektrische Verbindung unterbrochen würde, ist zur Vermeidung vorgesehen, daß entweder vom Inneren des Gehäuses oder vom Motortopf her oder von außen auf den Stecker ein Sicherungselement gestülpt wird. Das von innen anbringbare Sicherungselement könnte gabelförmig gestaltet sein.

Beim Aufschieben würde sich das Sicherungselement verformen, so daß in einer bestimmten Stellung ein Zurückspringen erfolgt. Das von außen auf den Stecker stülpbare Sicherungselement könnte kappenförmig gestaltet sein. Auch hier könnten die form- und materialfedernden Eigenschaften eines Kunststoffes ausgenutzt werden, um dieses Sicherungselement aufzubringen, und beispielsweise durch federnde Rastungen festzulegen.

Es kann erforderlich werden, daß die miteinander verbundenen Teile gelöst werden müssen, beispielsweise für Reparatur- oder Wartungsarbeiten. Es ist deshalb vorgesehen, daß der elektromotorische Linearantrieb zum Lösen der Sicherungselemente mit einem entsprechend gestalteten Hilfswerkzeug ausgestattet ist.

Da es sich bei den in Rede stehenden Linearantrieben um Massenartikel handelt, die darüber hinaus preiswert hergestellt werden sollen, ist zur Reduzierung der Teile noch vorgesehen, daß das freie, dem Gehäuse abgewandt liegende Ende der Spindel eine Aufweitung oder eine Verdickung aufweist, die einen formschlüssigen Endanschlag für die Spindelmutter bildet.

Anhand der beigefügten Zeichnungen wird die Erfindung noch näher erläutert.

Es zeigen:
- Figuren 1 bis 3: den erfindungsgemäßen Linearantrieb in drei verschiedenen Ansichten,
- Figur 4: den Linearantrieb im Längsschnitt,
- Figur 5: einen der Figur 4 entsprechenden Teilschnitt in vergrößerter Darstellung,
- Figur 6: den Linearantrieb in einer weiteren Ausführungsform in einer perspektivischen Darstellung,
- Figur 7: den Linearantrieb gemäß der Figur 6 in einer anderen Ansicht,
- Figur 8: das Flanschrohr des Linearantriebes in einer sprengbildlichen Darstellung.

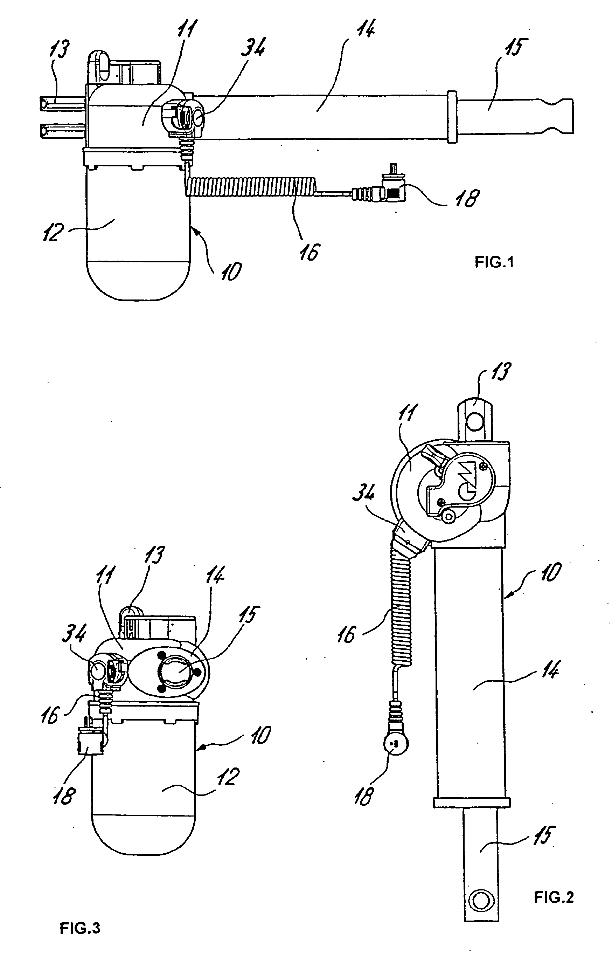

Der in den Figuren 1-3 dargestellte Linearantrieb 10 ist mit einem Gehäuse 11 ausgestattet, an den ein Motortopf 12 in noch näher beschriebener Weise, ein Anschlußelement in Form eines Gabelkopfes 13 und ein Flanschrohr 14 festgelegt sind.

Der Linearantrieb 10 ist außerdem mit einem ausfahrbaren Hubrohr 15 ausgestattet, welches in dem Flanschrohr 14 in noch näher beschriebener Weise geführt ist.

Die zuvor beschriebenen Bauteile können aus einem Kunststoff gefertigt werden.

Die Stromversorgung des Linearantriebes 10 erfolgt über ein Stromzuführkabel 16, welches an beiden Enden mit Steckern 17, 18 ausgerüstet sein kann. Der Stecker 17 kann in eine Steckdose eingesteckt sein, die im oder am Gehäuse 11 montiert ist. Auf nicht näher dargestellte Art und Weise kann jede einzelne Ader des Stromzuführungskabels 16 einen eigenen Stecker oder ein weiterführendes Verbindungselement mit der weiterführenden Ader aufweisen. Der Stecker 18 wird in eine Steckdose eines Transformators mit nachgeschaltetem Gleichrichter eingesteckt.

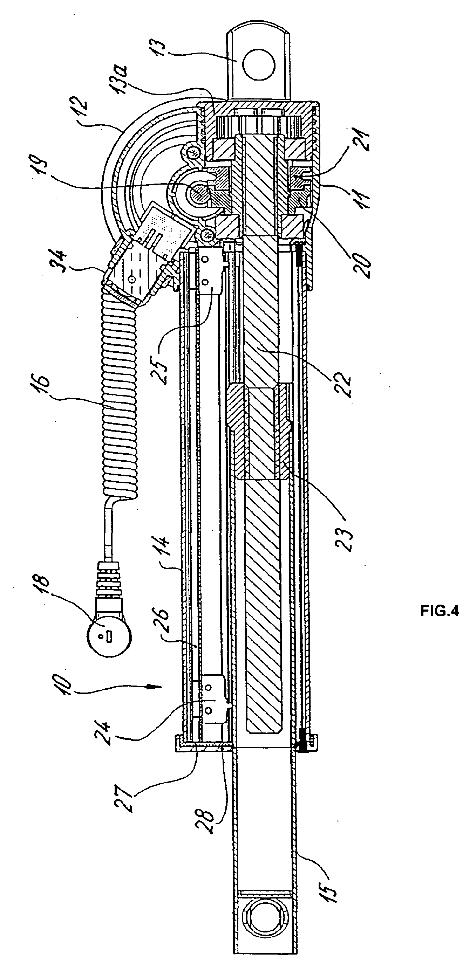

Die Figur 4 zeigt den grundsätzlichen Aufbau des Linearantriebes 10.

Der Gleichstrommotor ist mit dem Gehäuse 11 verbunden und treibt eine Schnecke 19 an, die drehfest auf den Abtriebszapfen aufgesetzt ist. Der Abtriebszapfen selbst könnte jedoch auch als Schnecke ausgebildet sein.

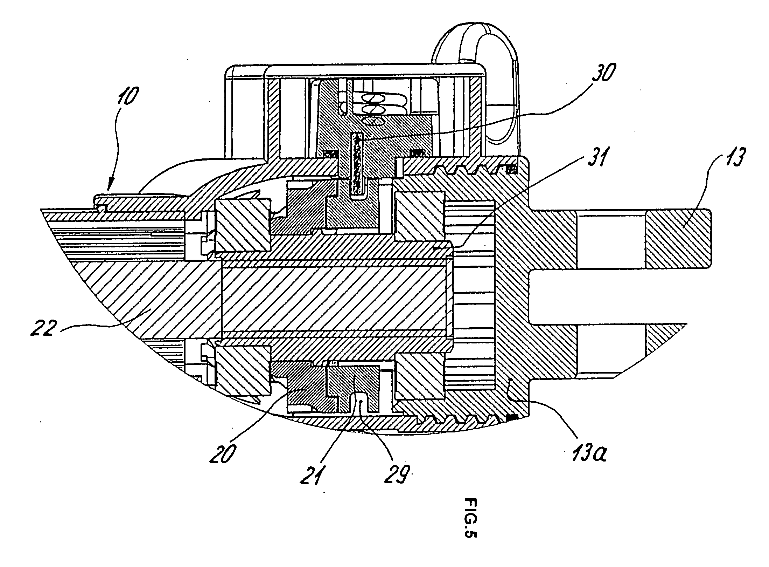

Die Schnecke 19 steht mit einem Schneckenrad 20 in Verbindung, dem eine Ausrückscheibe 21 funktionell zugeordnet ist, den Antriebszug auszurücken. Das Schneckenrad 20 ist auf der Buchse 31 (Fig. 5) drehbar gelagert und durch die Ausrückscheibe 21 kraftschlüssig mit der Spindel 22 verbunden.

In einer bevorzugten Ausführungsform ist das Schneckenrad 20 fest auf die Buchse 31 aufgesetzt. Bei dieser Ausführungsform wird auf die Ausrückscheibe 21 sowie auf den Ausrückhebel 30 und dessen Lagerung verzichtet. Das Schneckenrad 20 und die Buchse 31 können alternativ jedoch auch ein einstückiges Formteil bilden.

Je nach Drehrichtung der Spindel 22 verfährt die Spindelmutter entweder in Richtung zu seinem freien Ende oder in Richtung zum Schneckenrad 20.

Auf die Spindelmutter 23 ist das Hubrohr 15 aufgesetzt. Die Endstellungen der Spindelmutter 23 werden durch zwei Endschalter 24, 25 vorgegeben, die auf eine Endschalterleiste 26 aufgesetzt sind, die im Flanschrohr 14 festgelegt ist. Die Endschalter 24, 25 können in ihren Stellungen verändert werden.

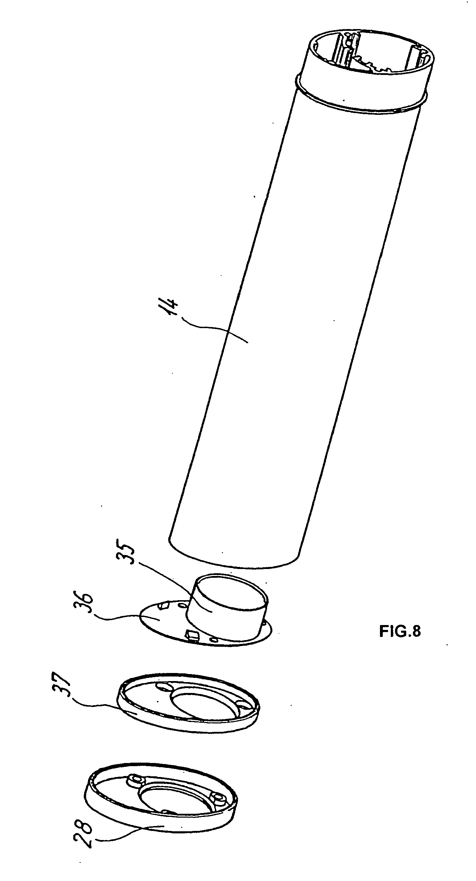

Das freie, dem Schneckenrad 20 bzw. dem Gehäuse 11 abgewandte Ende des Flanschrohres 14 ist durch eine Dichtung 27 und eine Endkappe 28 verschlossen, wie noch anhand der Figur 8 näher erläutert wird.

Die Figuren 4 und 5 zeigen, daß das Anschlußelement in Form des Gabelkopfes 13 einen zylindrischen Ansatz 13a aufweist, der mit einem Außengewinde versehen ist. Demzufolge ist das Gehäuse 11 mit einem Innengewinde versehen. Dieses Gewinde ist mehrgängig, vorzugsweise viergängig, so daß der Gabelkopf 13 auch entgegen den gezeichneten Ausführungen nach den Figuren 4 und 5 in eine um 90° gedrehte Lage festgelegt werden kann.

In nicht näher dargestellter Weise wird der Gabelkopf 13 gegen ungewolltes Lösen gesichert. Die Sicherungselemente können ähnlich wie beim Motortopf 12 Rastzungen sein. In einer bevorzugten Ausführung wird als Sicherungselement ein mechanisches Verbindungselement, beispielsweise eine Schraube, verwendet. Durch Entfernen des Sicherungselementes kann somit der Gabelkopf 13 gelöst werden. Somit ist es möglich, auch nach erfolgter Montage des Antriebes diesen Gabelkopf 13 aus dem Gehäuse 11 herauszuschrauben und durch erneutes Einschrauben, jedoch nun unter einem versetzten Winkel, den Gabelkopf 13 in dieser versetzten Position durch das mehrgängige Gewinde wieder festzulegen. Anschließend wird das Sicherungselement wieder eingesetzt.

Die Figur 5 zeigt, daß die Ausrückscheibe 21 eine umfangsseitige Ringnut 29 aufweist, in die ein Ausrückhebel 30 eingreift. Der Ausrückhebel 30 ist nach außen geführt und kann im Bedarfsfall betätigt werden, so daß die Antriebsverbindung unterbrochen ist.

Die dargestellte Ausführung ist so ausgelegt, daß das Schneckenrad 20 lose auf eine Buchse 31 aufgesetzt ist und die Antriebsverbindung zur Spindel 22 erfolgt vom Schneckenrad 20 auf die Ausrückscheibe 21 und über die Buchse 31 zur Spindel 22.

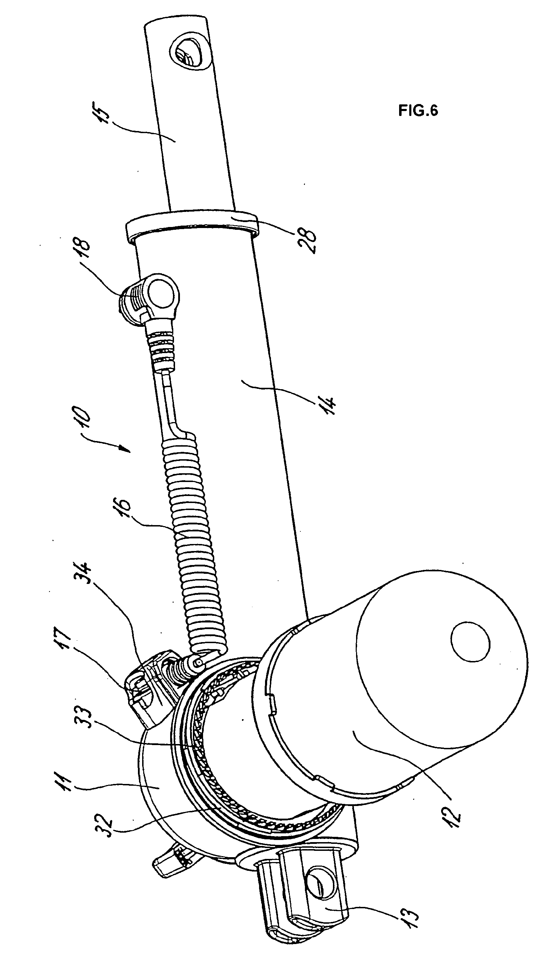

Die Figur 6 zeigt den Linearantrieb 10 mit abgenommenem Motortopf 12. Die Figur 6 zeigt außerdem, daß das Gehäuse 11 mit Außengewindegängen 32 versehen ist. Demzufolge ist der Motortopf 12 mit angepaßtem Innengewindegängen ausgestattet, so daß der Motortopf 12 durch Drehung am Gehäuse 11 festgelegt ist.

Außerdem ist diese Schraubverbindung gesichert. Dies erfolgt im dargestellten Ausführungsbeispiel durch eine Stirnverzahnung 33, die auf einem Kreisring liegt.

Die einzelnen Zähne der Stirnverzahnung 33 haben jeweils eine flache Flanke und eine steile Flanke. Der Motortopf 12 hat wenigstens einen entsprechenden Rastzahn, so daß beim Verdrehen des Motortopfes 12 die einzelnen Zähne der Stirnverzahnung 33 übersprungen werden. In einer bestimmten Stellung ist es nicht mehr möglich, den Motortopf 12 noch weiter zu verdrehen. Ein Herausdrehen aus den Gewindegängen 32 des Gehäuses 11 ist ebenfalls nicht möglich.

Die Figur 6 zeigt außerdem noch, daß der dem Gehäuse 11 zugeordnete Stecker 17 durch eine aufgestülpte Abdeckkappe 34 gesichert ist. Dadurch wird die elektrische Verbindung des Steckers 17 mit der Steckdose gegen Zugkräfte geschützt, wenn am Stromzuführkabel 16 gezogen wird. Entgegen dieser Darstellung könnte die Zugentlastung auch durch ein inneres Sicherungselement bewirkt werden, welches gabelförmig gestaltet ist, und innerhalb des Gehäuses 11 auf den Stecker 17 aufgesetzt ist.

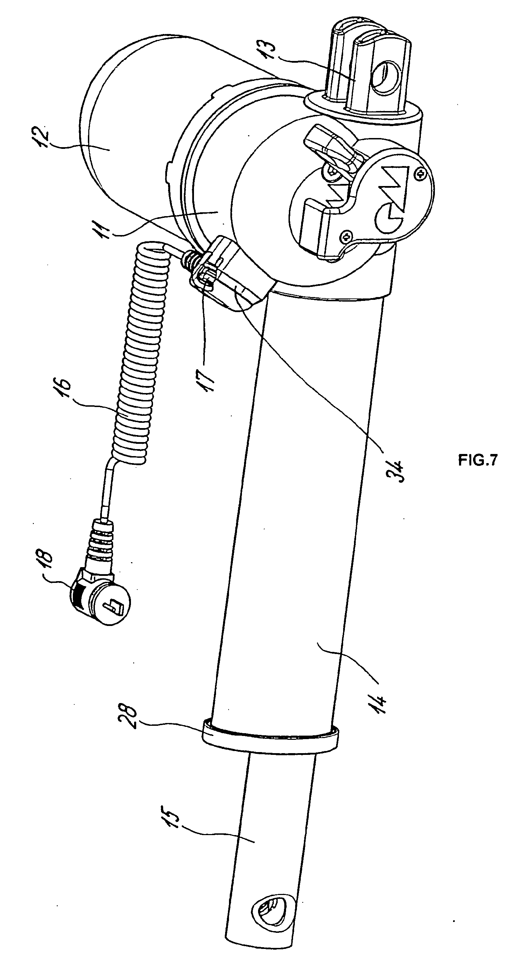

Die Figuren 6 und 7 zeigen noch, daß das Hubrohr 15 im freien Endbereich mit einer Querbohrung versehen ist, um es mit einem Hebel oder einem Lenker eines Beschlages zu verbinden.

Die Figur 7 zeigt den Antrieb nach der Figur 6 in einer gedrehten Lage.

Es sei noch erwähnt, daß das Flanschrohr 14 im Querschnitt ovalförmig gestaltet ist.

Die Spindelmutter 23 (Fig. 4) hat eine der Innenkontur des Flanschrohres angepaßte äußere Kontur, so daß sie schließend geführt ist.

Die Figur 4 zeigt noch, daß sich die Spindel 22 bis in das Gehäuse 11 hinein erstreckt und durch zwei Wälzlager gelagert ist, die auf die Buchse 31 aufgesetzt sind.

Die Figur 8 zeigt die Führung des Hubrohres 15 im Flanschrohr 14. Dazu wird in das dem Gehäuse 11 abgewandt liegende Ende des Flanschrohres 14 ein Führungselement eingesetzt, welches aus einer Führungsbuchse 35 und einem Flansch 36 besteht.

Die Abdichtung des Hubrohres 15 erfolgt durch ein Dichtelement 37, welches der Kontur des Flanschrohres 14 angepaßt und mit einer Bohrung versehen ist. Das Dichtelement 37 ist aus einem relativ weichen Material hergestellt.

Zur besseren Abdichtung ist im Bereich der Bohrung eine Dichtlippe aus einem weicheren Material vorgesehen. Das Dichtelement 37 kann im Zweikomponentenspritzgußverfahren hergestellt. Alternativ dazu besteht die Möglichkeit, daß das Führungselement 35 einstückig mit der Endkappe 28 ausgebildet ist und das Dichtelement 37 aus einem relativ weichen Material nach dem ZweiKomponenten-Spritzgußverfahren an die Endkappe 28 angespritzt ist. Die Festlegung des Führungselementes und des Dichtelementes 37 erfolgt durch die Endkappe 28, die ebenfalls mit einer Bohrung entsprechend dem Querschnitt des Hubrohres 15 versehen ist.

Die Festlegung der Endkappe 28 erfolgt durch Schrauben oder Stifte oder Kerbnägel, die in entsprechende Einschraubkanäle von im Inneren des Flanschrohres 14 verlaufenden Stegen eingesetzt werden.

Der Gabelkopf 13 kann als letztes Teil mit dem Gehäuse 11 verbunden werden, während der Motortopf 12 nach der Montage des Schneckentriebes oder auch in einem Zwischenstadium mit dem Gehäuse 11 verbunden werden kann.

Die Sicherungselemente können nicht nur in Form von Rastzungen gestaltet sein, die an den miteinander zu verbindenden Bauteilen angeformt sind. Es können auch zusätzlich oder auch allein mechanische Verbindungselemente in Form von Schrauben, Niete oder dergleichen oder auch zusätzlich oder allein stoffschlüssige Verbindungselemente in Form von Klebstoffen zur Sicherung verwendet werden.

In nicht näher dargestellter Form können innerhalb des Gehäuses 11, des Motortopfes 12 oder des Flanschrohres 14 elektronische Bauteile und elektronische Schaltungen zum Messen, Auswerten, Steuern und Regeln untergebracht sein. Weiterhin können diese Bauteile oder Schaltungen zur elektrischen Energieversorgung oder Energieaufbereitung hinzugezogen oder dafür verantwortlich sein.

## Patentansprüche

1. Elektromotorischer Linearantrieb mit einem Gehäuse (11), das mit einem Motor verbunden ist wenigstens einem Motortopf (12), mindestens einem Anschlußteil (13) sowie mit einem Stromzuführkabel (16), einem ausfahrbaren Hubrohr (15) und einem feststehenden Flanshrohr (14), **dadurch gekennzeichnet, daß** zumindest die Verbindungsbereiche des Gehäuses (11) mit dem Motortopf (12) und dem Anschlußteil (13) zylindrisch ausgebildet sind, daß die Verbindungsbereiche in radialer Richtung durch eine Drehbewegung des Gehäuses (11) und/oder des Motortopfes (12) und/oder des Anschlußteiles (13) gebildet sind, und daß die Verbindungsbereiche in axialer Richtung formschlüssig ausgebildet sind, wobei
die Verbindungsbereiche des Gehäuses (11), des Motortopfes (12) und des Anschlussteiles (13) ineinandergreifende Gewindegänge aufweisen; und der Verbindungsbereich zwischen dem Gehäuse (11) und dem Anschlußteil (13) mehrgängige Gewindeabschnitte aufweist, vorzugsweise viergängige Gewindeabschnitte.

2. Elektromotorischer Linearantrieb nach Anspruch 1, **dadurch gekennzeichnet, daß** das Gehäuse (11) mit Außengewindegängen und/oder Innengewindegängen versehen ist.

3. Elektromotorischer Linearantrieb nach Anspruch 1 oder 2, **dadurch gekennzeichnet, daß** der Motortopf (12) mit Innengewindegängen und/oder Außengewindegängen und dass das Anschlussteil (13) mit Außengewindegängen und/oder Innengewindegängen versehen ist.

4. Elektromotorischer Linearantrieb nach einem oder mehreren der vorhergehenden Ansprüche 1 bis 3, **dadurch gekennzeichnet, dass** der Motortopf (12) als Ringelement ausgebildet und schließend in den Ringspalt zwischen dem Motor und dem Gehäuse (11) eingesetzt ist.

5. Elektromotorischer Linearantrieb nach Anspruch 4, **dadurch gekennzeichnet, daß** das Ringelement mit den Gewindegängen des Gehäuses (11) korrespondiert.

6. Elektromotorischer Linearantrieb nach einem oder mehreren der vorhergehenden Ansprüche 4 bis 5, **dadurch gekennzeichnet, daß** der Motortopf (12) topfförmig gestaltet ist und an der dem Gehäuse (11) zugewandten Seite offen ist, und daß in den gebildeten Ringspalt eine Dichtung eingesetzt ist.

7. Elektromotorischer Linearantrieb nach einem oder mehreren der vorhergehenden Ansprüche 1 bis 6, **dadurch gekennzeichnet, daß** in den Verbindungsbereichen zwischen dem Gehäuse (11) und dem Motortopf (12) mit Innengewinde und/oder dem Anschlußteil (13) Sicherungselemente vorgesehen sind.

8. Elektromotorischer Linearantrieb nach Anspruch 7, **dadurch gekennzeichnet, daß** in den Verbindungsbereichen in Aussparungen eingreifende Federzungen, Schrauben oder Stifte vorgesehen sind.

9. Elektromotorischer Linearantrieb nach Anspruch 1, **dadurch gekennzeichnet, daß** das Anschlußteil (13) in zwei Stellungen am Gehäuse (11) festsetzbar ist.

10. Elektromotorischer Linearantrieb nach Anspruch 7, **dadurch gekennzeichnet, daß** das Sicherungselement zwischen dem Gehäuse (11) und dem Motortopf (12) und/oder dem Anschlußteil (13) als eine am Gehäuse (11) vorgesehene Stirnverzahnung (32) ausgebildet ist und daß am Motortopf (12) wenigstens ein Rastzahn angesetzt ist oder daß die Sichdungselemente als mechanische Verbindungselemente ausgebildet sind.

11. Elektromotorischer Linearantrieb nach einem oder mehreren der vorhergehenden Ansprüche 1 bis 6, **dadurch gekennzeichnet, daß** das Gehäuse (11) oder der Motortopf (12) eine Steckdose aufweist und daß das Stromzuführkabel (16) einen in die Steckdose einsteckbaren Kleinstecker (17) im Flach- oder Rundformat aufweist oder daß jede Ader des Stromzuführkabels einen Stecker trägt.

12. Elektromotorischer Linearantrieb nach Anspruch 11, **dadurch gekennzeichnet, daß** der in die Steckdose eingesteckte Stecker (17) des Stromzuführkabels mittels eines Sicherungselementes gesichert ist.

13. Elektromotorischer Linearantrieb nach Anspruch 12, **dadurch gekennzeichnet, daß** das Sicherungselement als eine außen auf den Stecker (17) aufstülpbare, durch federnde Rastungen festgelegte Abdeckkappe (34) ausgebildet ist, oder daß das Sicherungselement von innen auf den Stecker (17) aufbringbar und gabelförmig ausgebildet ist.

14. Elektromotorischer Linearantrieb nach einem oder mehreren der vorhergehenden Ansprüche 1 bis 13, **dadurch gekennzeichnet, daß** der elektromotorische Linearantrieb (10) zum Lösen der Sicherungselemente mit einem entsprechend gestalteten Hilfswerkzeug ausgestattet ist.

## Claims

1. Electromotive linear drive comprising a housing (11), which is connected to a motor, at least one motor pot (12), at least one connection part (13), and also comprising a power supply cable (16), an extendable lifting tube (15) and a stationary flange tube (14), **characterized in that** at least the connecting regions of the housing (11) to the motor pot (12) and the connection part (13) are of cylindrical design, **in that** the connecting regions are formed in the radial direction by a rotary movement of the housing (11) and/or of the motor pot (12) and/or of the connection part (13), and **in that** the connecting regions are of interlocking design in the axial direction, with the connecting regions of the housing (11), of the motor pot (12) and of the connection part (13) having interengaging thread turns, and the connecting region between the housing (11) and the connection part (13) having multi-turn thread sections, preferably four-turn thread sections.

2. Electromotive linear drive according to Claim 1, **characterized in that** the housing (11) is provided with external thread turns and/or internal thread turns.

3. Electromotive linear drive according to Claim 1 or 2, **characterized in that** the motor pot (12) is provided with internal thread turns and/or external thread turns, and **in that** the connection part (13) is provided with external thread turns and/or internal thread turns.

4. Electromotive linear drive according to one or more of the preceding Claims 1 to 3, **characterized in that** the motor pot (12) is in the form of an annular element and is inserted into the annular gap between the motor and the housing (11) in a locking manner.

5. Electromotive linear drive according to Claim 4, **characterized in that** the annular element corresponds to the thread turns of the housing (11).

6. Electromotive linear drive according to one or more of the preceding Claims 4 and 5, **characterized in that** the motor pot (12) is of pot-like configuration and is open on that side which faces the housing (11), and **in that** a seal is inserted into the annular gap formed.

7. Electromotive linear drive according to one or more of the preceding Claims 1 to 6, **characterized in that** securing elements are provided in the connecting regions between the housing (11) and the motor pot (12) with an internal thread and/or the connection part (13).

8. Electromotive linear drive according to Claim 7, **characterized in that** spring tongues, screws or pins which engage in recesses are provided in the connecting regions.

9. Electromotive linear drive according to Claim 1, **characterized in that** the connection part (13) can be fixed in two positions on the housing (11).

10. Electromotive linear drive according to Claim 7, **characterized in that** the securing element between the housing (11) and the motor pot (12) and/or the connection part (13) is in the form of a spur tooth system (32) which is provided on the housing (11), and **in that** at least one latching tooth is attached to the motor pot (12), or **in that** the securing elements are in the form of mechanical connecting elements.

11. Electromotive linear drive according to one or more of the preceding Claims 1 to 6, **characterized in that** the housing (11) or the motor pot (12) has a plug socket, and **in that** the power supply cable (16) has a small flat or round plug (17) which can be inserted into the plug socket, or **in that** each core of the power supply cable is fitted with a plug.

12. Electromotive linear drive according to Claim 11, **characterized in that** the plug (17), which is inserted into the plug socket, of the power supply cable is secured by means of a securing element.

13. Electromotive linear drive according to Claim 12, **characterized in that** the securing element is in the form of a covering cap (34) which can be placed on the outside of the plug (17) and is fixed by sprung latches, or **in that** the securing element can be fitted on the plug (17) from the inside and is of fork-like design.

14. Electromotive linear drive according to one or more of the preceding Claims 1 to 13, **characterized in that** the electromotive linear drive (10) is equipped with a correspondingly configured auxiliary tool for releasing the securing elements.

## Revendications

1. Entraînement linéaire à moteur électrique avec un carter (11) raccordé à un moteur, au moins un pot de moteur (12), au moins une pièce de raccord (13) ainsi qu'un câble d'alimentation en courant (16), un tube élévateur télescopique (15) et un tube à bride fixe (14), **caractérisé en ce qu'**au moins les zones de jonction du carter (11) au pot du moteur (12) et à la pièce de raccord (13) sont réalisées avec une forme cylindrique, **en ce que** les zones de jonction sont formées en direction radiale par un mouvement de rotation du carter (11) et/ou du pot du moteur (12) et/ou de la pièce de raccord (13), et **en ce que** les zones de jonction sont formées par complémentarité de forme en direction axiale, lesdites zones de jonction du carter (11), du pot du moteur (12) et de la pièce de raccord (13) présentant des filets hélicoïdaux s'engrenant réciproquement, et la zone de jonction entre le carter (11) et la pièce de raccord (13) présentant des segments filetés à plusieurs pas, de préférence des segments filetés à quatre pas.

2. Entraînement linéaire à moteur électrique selon la revendication 1, **caractérisé en ce que** le carter (11) est pourvu de filets mâles et/ou de filets femelles.

3. Entraînement linéaire à moteur électrique selon la revendication 1 ou la revendication 2, **caractérisé en ce que** le pot du moteur (12) est pourvu de filets femelles et/ou de filets mâles, et **en ce que** la pièce de raccord (13) est pourvu de filets mâles et/ou de filets femelles.

4. Entraînement linéaire à moteur électrique selon l'une ou plusieurs des revendications 1 à 3, **caractérisé en ce que** le pot du moteur (12) est conformé en élément annulaire et est mis en place dans la fente annulaire entre le moteur et le carter (11) de manière à obturer celle-ci.

5. Entraînement linéaire à moteur électrique selon la revendication 4, **caractérisé en ce que** l'élément annulaire correspond aux filets du carter (11).

6. Entraînement linéaire à moteur électrique selon l'une ou plusieurs des revendications 4 et 5, **caractérisé en ce que** le pot du moteur (12) présente une forme de marmite et est ouvert sur le côté dirigé vers le carter (11), et **en ce qu'**un joint est mis en place dans la fente annulaire formée.

7. Entraînement linéaire à moteur électrique selon l'une ou plusieurs des revendications 1 à 6, **caractérisé en ce que** des éléments de blocage sont prévus dans les zones de jonction entre le carter (11) et le pot du moteur (12) à filet femelle et/ou la pièce de raccord (13).

8. Entraînement linéaire à moteur électrique selon la revendication 7, **caractérisé en ce que** des lames flexibles, des vis ou des goupilles s'engageant dans des évidements sont prévues dans les zones de jonction.

9. Entraînement linéaire à moteur électrique selon la revendication 1, **caractérisé en ce que** la pièce de raccord (13) est fixable dans deux positions sur le carter (11).

10. Entraînement linéaire à moteur électrique selon la revendication 7, **caractérisé en ce que** l'élément de blocage entre le carter (11) et le pot du moteur (12) et/ou la pièce de raccord (13) est réalisé comme denture droite (32) prévue sur le carter (11), et **en ce qu'**au moins une dent d'arrêt est fixée sur le pot du moteur (12), ou **en ce que** les éléments de blocage sont réalisés comme éléments mécaniques de liaison.

11. Entraînement linéaire à moteur électrique selon l'une ou plusieurs des revendications 1 à 6, **caractérisé en ce que** le carter (11) ou le pot du moteur (12) comporte une prise, et **en ce que** le câble d'alimentation en courant (16) comporte une petite fiche (17) de forme plate ou cylindrique insérable dans la prise, ou **en ce que** chaque brin du câble d'alimentation en courant supporte une fiche.

12. Entraînement linéaire à moteur électrique selon la revendication 1, **caractérisé en ce que** la fiche (17) du câble d'alimentation en courant insérée dans la prise est fixée au moyen d'un élément de blocage.

13. Entraînement linéaire à moteur électrique selon la revendication 2, **caractérisé en ce que** l'élément de blocage est réalisé comme un capuchon de couverture (34) retournable vers l'extérieur sur la fiche (17), fixé par des enclenchements à ressort, ou **en ce que** l'élément de blocage est applicable de l'intérieur sur la fiche (17) et réalisé en forme de fourche.

14. Entraînement linéaire à moteur électrique selon l'une ou plusieurs des revendications 1 à 13, **caractérisé en ce que** ledit entraînement linéaire à moteur électrique (10) est pourvu d'un outil auxiliaire de forme adaptée pour le desserrage des éléments de blocage.
